# FASCICULE DE BREVET EUROPEEN

(11) **EP 1 342 217 B1**
(45) Date de publication et mention de la délivrance du brevet: **21.01.2009**
(21) Numéro de dépôt: 01978523.7
(22) Date de dépôt: 10.10.2001
(51) Int. Cl.: G08G 1/14, G08G 5/06

(54) **PROCEDE DE GESTION D'EQUIPES D'ASSISTANCE AU SOL D'ENGINS DE LOCOMOTION ET SYSTEME DE TRANSMISSION DE DONNEES POUR LA MISE EN OEUVRE DU PROCEDE**
VERFAHREN ZUR FÜHRUNG VON BODENPERSONAL FÜR FORTBEWEGUNGSMITTEL SOWIE DATENÜBERTRAGUNGSYSTEM FÜR DEN EINSATZ DIESES VERFAHRENS
METHOD FOR MANAGING GROUND ASSISTANCE TEAMS OF VEHICLES AND DATA TRANSMISSION SYSTEM THEREFOR

(30) Priorité: 10.10.2000 FR 0012925
(43) Date de publication de la demande: 10.09.2003
(73) Titulaire: SAGEM Sécurité, 75015 Paris (FR)
(72) Inventeur: WEISS, Francis, F-92140 Clamart (FR)
(74) Mandataire: Bloch, Gérard
(86) Numéro de dépôt international: PCT/FR2001/003123
(87) Numéro de publication internationale: WO 2002/031783

(56) Documents cités:
- WO-A-00/35732
- WO-A-00/52550
- WO-A-93/02433
- KLAUS L: "GESTALTUNGSFELDER BEIM MOBILFUNK IN DER ARBEITSWELT1" ITG FACHBERICHTE,VDE VERLAG, BERLIN,DE, no. 124, 1994, pages 399-410, XP001011337 ISSN: 0932-6022
- SHATTIL S ET AL: "WIRELESS COMMUNICATION SYSTEM DESIGN FOR AIRPORT SURFACE MANAGEMENTPART I: AIRPORT RAMP MEASUREMENTS AT 5.8 GHZ" NEW ORLEANS, LA, JUNE 18-22, 2000,NEW YORK, NY: IEEE,US, 2000, pages 1552-1557, XP001012497 ISBN: 0-7803-6284-5

## Description

La présente invention concerne la gestion d'équipes d'assistance au sol d'engins de transport tels que par exemple des avions ou encore des trains, des bus ou des camions.

Si on prend l'exemple d'un avion de ligne, plusieurs équipes de piste de l'aéroport, de divers métiers, attendent l'avion, sur la zone de stationnement prévue par un centre de gestion. Chaque équipe est chargée d'une tâche spécifique, telle que l'accostage des passerelles, la manutention des bagages, la restauration, l'alimentation électrique, le ravitaillement en kérosène et autres.

Les détails des tâches sont adaptés au type d'avion. Les tâches tiennent ainsi compte du nouveau vol prévu pour l'avion.

Pour prendre connaissance de leurs tâches, les équipes consultent des panneaux d'affichage ou des terminaux informatiques fixes, situés dans les bâtiments de l'aéroport, commandés par le centre de gestion. Les informations ainsi acquises identifient le vol d'arrivée et celui de départ et les heures correspondantes, et spécifient les détails des tâches. Comme, en pratique, les horaires de vol présentent souvent des décalages par rapport à ceux théoriques, les équipes sont présentes sur la zone de stationnement longtemps avant l'heure d'arrivée théorique. De ce fait, les équipes sont isolées du centre de gestion et ne peuvent donc être informées des changements éventuels dans les horaires, les tâches ou même le lieu de stationnement prévu.

Par ailleurs, lorsque l'avion est reparti, les équipes doivent fournir un compte-rendu de leur travail, qui sert en particulier à l'exploitant de l'aéroport pour la facturation auprès de la compagnie aérienne concernée. Pour éviter les oublis et erreurs, ces compte-rendus devraient être établis immédiatement, en temps réel. Cependant, la rédaction de ces compte-rendus, manuscrits, est pénible, si bien qu'en pratique les équipes ne les rédigent que le soir, après retour dans un local. Il s'en suit les oublis et erreurs mentionnés ci-dessus.

La présente invention vise à proposer une solution pour mieux gérer les équipes d'assistance.

A cet effet, l'invention concerne, tout d'abord, un procédé de gestion d'équipes d'assistance au sol d'un engin de transport dans une zone de stationnement selon la revendication 1.

Grâce à l'invention, la gestion des équipes par le centre est adaptative puisqu'elle s'effectue en temps réel, par liaison sans fil.

On notera que WO93/02433, qui concerne l'assistance aux passagers et autres personnes se trouvant dans un aéroport et qui sont équipés d'un petit dispositif individuel portable de traitement sans fil recevant des informations de bornes, concerne un réseau hertzien local dans lequel il n'y a pas d'échanges entre les dispositifs individuels et les bornes et qui n'est donc pas approprié à la gestion d'équipes d'assistance.

Quant à WO00/52550, il ne concerne que le diagnostic et ne traite pas de problèmes de maintenance.

En ce qui concerne WO00/35732, il concerne l'assistance en vol qui exclut la radiotéléphonie.

L'invention concerne aussi un système de transmission de données pour la mise en oeuvre du procédé de l'invention selon la revendication 3.

De préférence, dans le système de l'invention, les moyens de saisie et de transmission de comptes rendus des terminaux comportent un logiciel d'application métier pour la saisie et la transmission des comptes rendus d'exécution d'une tâche métier.

Avantageusement encore, la passerelle électronique bidirectionnelle comporte des moyens logiciels pour traiter un protocole applicatif, pour la gestion d'équipes d'assistance au sol, d'échange de données entre le centre de gestion des équipes et le réseau de radiotéléphonie cellulaire auquel sont reliées les équipes.

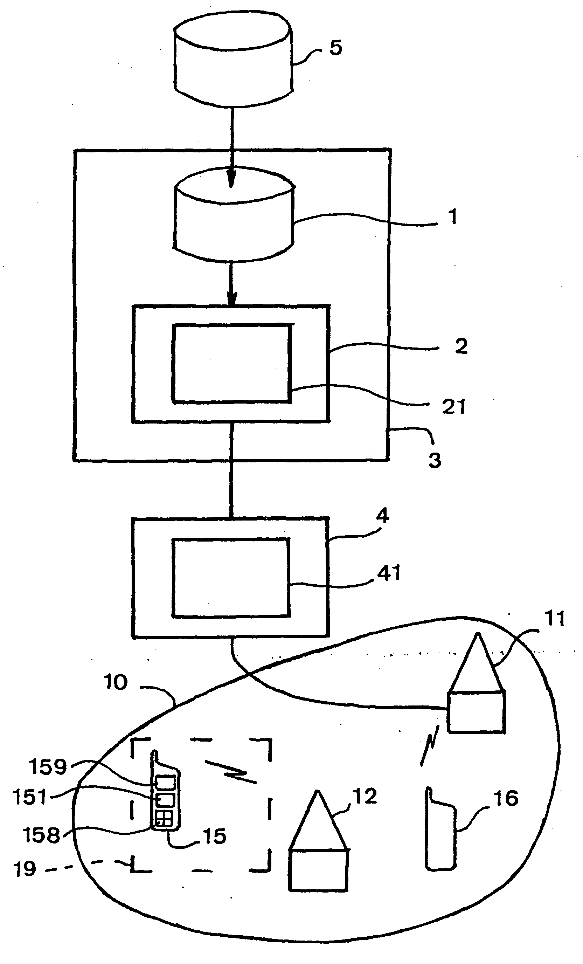

L'invention sera mieux comprise à l'aide de la description suivante du système de transmission de données selon l'invention pour la mise en oeuvre du procédé de gestion d'équipes d'assistance au sol de l'invention, en référence à la figure unique qui représente le système de transmission de données.

Le système de transmission de données du présent exemple est exploité par les services de gestion des vols d'avions d'un aéroport public. Le système comprend une base de données 1, avec la liste des vols prévus, appartenant à un centre 3 de gestion d'équipes d'assistance au sol, ayant chacune un métier spécifique et chargées chacune d'une tâche correspondante. Le centre de gestion (3) comporte un ensemble de serveurs métiers (2), spécifiant leurs tâches aux équipes respectives et coordonnant leurs activités respectives à partir des informations de la base de données (1).

Le centre de gestion (3) est relié par radio aux équipes d'assistance, et précisément à travers un réseau (10) de radiotéléphonie pour des terminaux mobiles, ici constituant un réseau cellulaire GSM privé à usage professionnel couvrant le site aéroportuaire considéré et donc en particulier des aires ou zones de parcs de stationnement des avions, comme le parc référencé (19).

Le centre de gestion (3) est relié au réseau (10) à travers une passerelle électronique d'accès bidirectionnel (4) ayant ici des fonctionnalités WAP, pour traiter des protocoles applicatifs d'échange de données, et précisément ici traitant la présente application de gestion d'équipes d'assistance au sol.

La passerelle 4 est ici un équipement fixe relié par fil à une station de base 11 du réseau 10. Chaque chef d'équipe dispose d'un terminal GSM 15, 16 pour communiquer avec l'une quelconque des stations de base 11, 12 du réseau 10. Dans cet exemple, le réseau GSM 10 est de type GPRS, afin de disposer de voies radio à débit numérique supérieur aux 9,6 kb/s classiques. D'autres réseaux radio conformes à d'autres normes sont envisageables, par exemple ceux aux normes UMTS, WACS (Wireless Airport Communication System : Système de communication sans fil pour aéroports) dans la bande des 2,4 GHz, ou encore DECT. En variante, la passerelle 4 est un terminal mobile comme ceux référencés 15, 16, dans la mesure où il dispose d'une ou éventuellement plusieurs voies radio de débit suffisant pour le trafic de données prévu. Par ailleurs, le réseau 10, dont les stations 11, 12 peuvent être montées dans des containers, peut être prévu pour utiliser des fréquences autres que celles du réseau public GSM, afin de pouvoir être installé rapidement et sans risque d'interférences.

Dans cet exemple, une base de données mondiale 5 comporte la liste de tous les vols programmés et les caractéristiques de ces vols, donc en particulier leurs numéros et les références des aéroports de départ et d'arrivée. La base de données mondiale 5 fournit à la base de données locale 1 un flux de données représentant les vols mondiaux programmés pour les jours suivants. On notera que le centre de gestion 3 aurait pu être situé à distance de l'aéroport considéré.

La gestion des équipes d'assistance au sol des avions va maintenant être expliquée plus en détails.

D'une façon générale, le centre de gestion 3 détermine les tâches des équipes d'assistance respectives et fournit à chaque équipe des informations spécifiant sa tâche. Le centre de gestion 3 transmet les informations de tâche à travers le réseau 10 et les équipes reçoivent les informations sur les terminaux respectifs 15, 16, qui les présentent à leurs utilisateurs. Dans cet exemple, les informations sont affichées sur un écran 159 du terminal 15, géré par un microprocesseur non représenté, permettant ici d'afficher huit lignes de caractères. Une présentation ou restitution vocale est aussi envisageable. Les terminaux 15, 16 sont identiques et donc seul le terminal 15 est décrit en détails. Après exécution de sa tâche, chaque équipe transmet en retour au centre de gestion 3, à partir de son terminal 15, 16, des compte-rendus d'exécution de sa tâche. Dans le centre de gestion 3, ce sont les serveurs métiers 2 qui sont en liaison avec les terminaux 15, 16. Les informations descendantes, ou feuilles d'ordre ou de tâche, du centre de gestion 3 vers les écrans 159 des terminaux 15, 16, spécifient ici le numéro de vol d'arrivée, la provenance, l'heure estimée d'arrivée, le retard prévu, la destination pour le vol de départ qui suit et l'heure prévue. Ce sont donc des informations générales transmises à toutes les équipes concernées par l'avion considéré.

La tâche spécifique d'une des équipes, telle qu'affichée à l'écran 159, par exemple sur une page d'écran suivante, sera par exemple d'assurer le guidage final au sol de l'avion arrivant jusqu'à sa place de stationnement du parc 19, de caler les roues, de raccorder un bloc électrogène à l'avion, de vérifier les extincteurs, de faire accoster les passerelles et de transporter les bagages. La première page, d'informations générales, peut être transmise par diffusion vers tous les terminaux 15, 16, alors que la page suivante est adressée sélectivement au seul terminal 15 (16) concerné par la tâche indiquée dans cette deuxième page de spécification de tâche.

Comme compte-rendu d'exécution de sa tâche, l'équipe considérée compose, sur l'écran 159, lorsque l'ensemble des opérations de cette tâche a été traité, un message indiquant par exemple que l'accostage des passerelles a été effectué comme prévu, que le dernier bagage a été sorti de la soute quinze minutes plus tard et que les bagages ont été livrés sur le tapis roulant spécifié. Le message composé est ensuite transmis, dans le sens montant, au centre de gestion 3 à travers le réseau 10 et la passerelle 4.

Pour élaborer les informations de gestion, la base de données 1 du centre de gestion 3 reçoit comme indiqué les données du flux entrant identifiant les aéroports de destination des vols mondiaux, constituant donc des sites comportant des parcs de stationnement des avions, sites associés aux données des mouvements programmés respectifs des avions. Comme évoqué plus haut, ces données identifient les aéroports de départ et d'arrivée des vols, par exemple "ROISSY". Les données du flux entrant sont comparées, en entrée de la base de données 1, à des données locales de la base de données 1, identifiant l'aéroport "ROISSY" ici considéré, pour, en cas de concordance entre celles-ci et un champ pertinent du flux entrant spécifiant l'aéroport de destination programmé "ROISSY ou ORLY, etc), extraire du flux les données associées du mouvement ou vol programmé afin d'engendrer ensuite, dans les serveurs métiers 2, les informations de tâches correspondantes.

Les échanges des informations ou données, montantes et descendantes, dans le réseau 10 s'effectuent ici, comme évoqué, selon un protocole applicatif de gestion WAP. La passerelle 4 comporte à cet effet un logiciel 41, associé à un processeur non représenté, pour gérer le protocole WAP traitant l'application de gestion des équipes d'assistance au sol, c'est-à-dire d'échange de données entre les serveurs métiers 2 et les divers terminaux 15, 16. Dans le sens descendant, la passerelle 4 reçoit, du centre de gestion 3, les informations à transmettre aux terminaux 15, 16 et gère leur transmission en coopération avec un logiciel WAP correspondant 151 en mémoire dans le terminal 15, (16). Par exemple, le terminal 15 reçoit la première page d'informations générales sur le vol arrivant, indiquée plus haut, puis le chef d'équipe émet, par une touche d'un clavier 158 du terminal 15, un acquis de réception vers le centre de gestion 3. Ce dernier émet alors la page suivante spécifiant les détails de la tâche de l'équipe considérée.

Dans le sens montant des informations, les chefs d'équipe transmettent les compte-rendus d'exécution des tâches et éventuellement, préalablement, toute question ou information relative à une tâche à exécuter. Les compte-rendus se présentent sous la forme d'un ou plusieurs messages ou pages de l'écran 159.

Le protocole WAP prévoit ici que le centre de gestion 3 émette sur demande une page de formulaire vierge de compte-rendu métier. Le logiciel WAP 151 commande le microprocesseur du terminal 15 pour présenter le formulaire sur l'écran 159 et le chef d'équipe le remplit au moyen de touches alphanumériques du clavier de saisie 158. En variante, le clavier 158 ne comporte, outre des touches de fonction, que des touches numériques et alors un logiciel de saisie et transcodage y est associé pour remplacer fonctionnellement les touches alphabétiques omises, en interprétrant le nombre d'actionnements successifs de chaque touche pour le transcoder en une lettre parmi trois possibles associées à la touche. Lorsque le compte-rendu nécessite plusieurs formulaires ("écrans"), le logiciel WAP 21 du centre de gestion 3 et le logiciel WAP 151 des terminaux 15, 16 sont prévus pour alternativement transmettre, au terminal 15, (16) associé à une tâche ou métier déterminé, une succession de pages ("écrans") vierges de formulaire de compte-rendu métier et pour qu'il transmette en retour la page remplie, par commande du microprocesseur du terminal 15. Les logiciels WAP 21, 41, 151 sont donc des logiciels d'application métier.

Dans les terminaux 15, (16), le logiciel WAP 151 est intégré dans une carte amovible SIM, d'identification de l'abonné. En variante, en cas de nécessité de volume mémoire important, le logiciel WAP est en mémoire morte, par exemple intégrée à un bloc batterie du terminal 15. Dans cet exemple, les logiciels WAP 21, 41, 151 comportent en particulier chacun un bloc logiciel WAP d'application télécopie permettant au centre de gestion 3 de transmettre une image de télécopie sur l'écran 159 du terminal 15. Il peut être prévu, pour le sens opposé, montant, un scanneur, éventuellement intégré au terminal 15, à barrette de capteurs optiques montée sur le boîtier du terminal 15, pour saisir des images de documents (codes barres ou autres) et les transmettre au centre de gestion 3. Un dispositif de prises de vues, fixes ou vidéo, pourrait aussi être relié ou même intégré au terminal 15 pour ainsi fournir au centre de gestion 3 à la fois, des informations écrites et des images, éventuellement sonores. Un opérateur du centre de gestion peut ainsi vérifier l'avancement des tâches et en outre être informé de tout incident ou accident et voir les images pertinentes pour commander des actions spécifiques de la part des équipes sur place ou appeler un service d'urgence.

Dans cet exemple, il est en outre prévu que le réseau 10 permette de localiser les terminaux 15, 16, qui coopèrent avec les stations 11, 12 pour en informer le centre de gestion 3. A cet effet, les microprocesseurs des terminaux, 15 par exemple, comportent en mémoire des données de carte géographique avec la position de la pluralité de stations comme celles référencées 11, 12 du réseau 10, en pratique au moins trois. Des circuits radio GSM du terminal 15 reçoivent les signaux, dans les trames GSM, émis à niveau déterminé par la pluralité de stations 11, 12 et comparent leurs niveaux, donc les atténuations correspondantes, pour déterminer des distances relatives entre le terminal 15 et les diverses stations 11, 12. On rappellera que l'amplitude du champ radio émis par un émetteur décroît linéairement avec la distance. Les rapports entre les amplitudes des divers champs radio reçus des stations 11, 12 fournissent donc directement, en l'absence d'obstacles, les valeurs de distances relatives recherchées. Il suffit ensuite de rechercher, sur une carte électronique portant les positions des stations 11, 12, la position réelle du terminal 15 qui correspond aux distances relatives déterminées ci-dessus. Une erreur due à un obstacle peut être détectée, et donc éliminée, lorsque le nombre des stations 11, 12 offre une redondance dans les variables (amplitudes) d'entrée du calcul de position. Le terminal 15 ici considéré transmet ensuite par radio sa position au centre de gestion 3.

En complément ou variante, la station 11, 12 qui gère le terminal 15, 16, c'est-à-dire la plus proche d'un point de vue radio, asservit temporellement le terminal 15, 16 pour qu'il émette ses signaux de voie temporelle avec une avance réglée par rapport à une trame de référence de réception de la station 11, 12 considérée, afin que cette avance compense le temps de propagation des ondes jusqu'à la station 11, 12 et que celles-ci arrivent exactement dans la voie temporelle prévue de la trame. La valeur de l'avance commandée représente directement la distance correspondante, connaissant la vitesse de propagation des ondes radio dans l'air. La station 11, 12 considérée peut ainsi directement fournir une distance absolue et chacune des distances absolues concernant les autres stations 12, 11 peuvent alors être déduite en multipliant la distance absolue ci-dessus par le rapport des deux atténuations correspondantes.

## Revendications

1. Procédé de gestion d'équipes d'assistance au sol d'un engin de transport dans une zone de stationnement (19), procédé dans lequel un centre de gestion (3) comportant un ensemble de serveurs métiers (2) détermine des tâches pour les équipes d'assistance respectives et fournit à chaque équipe des informations spécifiant sa tâche, procédé comprenant en outre les étapes suivantes
- le centre de gestion (3) transmet les informations de tâche sélectivement à des terminaux mobiles (15,16) à travers une passerelle bidirectionnelle de réseau (4), les terminaux mobiles (15, 16) et la passerelle (4) faisant partie d'un réseau de radiotéléphonie (10),
- les équipes reçoivent les informations respectives sur les terminaux mobiles (15, 16) du réseau (10), qui les leur présentent et, après exécution des tâches,
- les équipes transmettent en retour au centre (3), à partir des terminaux (15, 16) et à travers la passerelle (14), des comptes rendus d'exécution des tâches.

2. Procédé selon la revendication 1, dans lequel le centre de gestion (3) effectue une comparaison entre des données d'un flux entrant identifiant des sites de parcs de stationnement des engins de transport, sites associés à des données de mouvements programmés respectifs d'engins de transport, et des données identifiant l'un des sites pour, en cas de concordance, extraire du flux les données associées de mouvements programmés et engendrer des informations de tâche correspondantes.

3. Système de transmission de données pour la mise en oeuvre du procédé de la revendication 1, comportant :
- un réseau de radiotéléphonie (10), avec des terminaux mobiles (15, 16) et une passerelle bidirectionnelle (4) pour des équipes d'assistance au sol,
- un centre (3) de gestion des équipes, comportant un ensemble de serveurs métiers (2) agencé pour déterminer des tâches pour les équipes d'assistance respectives et pour transmettre sélectivement aux terminaux (15, 16), par la passerelle bidirectionnelle du réseau (4), des informations descendantes de spécification de tâches respectives, et
- les terminaux (15, 16) comportent des moyens (151, 158, 159) de saisie et de transmission au centre (3) à travers la passerelle (4) d'informations montantes de comptes rendus d'exécution des tâches des équipes respectives.

4. Système selon la revendication 3, dans lequel le centre de gestion (3) est relié au réseau (10), de type GSM, par une passerelle WAP (4).

5. Système selon l'une des revendications 3 et 4, dans lequel les terminaux (15, 16) comportant un écran (159) de présentation des informations descendantes et de composition de messages d'informations montantes.

6. Système selon l'une des revendications 3 à 5, dans lequel le centre de gestion (3) et les terminaux (15, 16) comportent des logiciels respectifs (21, 151) d'application de gestion pour alternativement transmettre aux terminaux (15, 16) une succession de pages vierges de formulaire de comptes rendus et pour transmettre en retour la page remplie.

7. Système selon l'une des revendications 3 à 6, dans lequel les terminaux (15, 16) sont agencés pour coopérer avec les stations (11, 12) afin de déterminer les positions des terminaux (15, 16) et de les transmettre au centre de gestion (3).

8. Système selon l'une des revendications 3 à 7, dans lequel les moyens de saisie et de transmission de comptes rendus des terminaux (15, 16) comportent un logiciel d'application métier (151) pour la saisie et la transmission de comptes rendus d'exécution d'une tâche métier.

9. Système selon la revendication 8, dans lequel le logiciel (151) est intégré dans une carte SIM.

10. Système selon la revendication 8, dans lequel le logiciel (151) est intégré dans un bloc batterie.

11. Système selon l'une des revendications 8 à 10, dans lequel il est prévu un logiciel de télécopie.

12. Système selon l'une des revendications 3 à 7, dans lequel la passerelle bidirectionnelle (4) comporte des moyens logiciels (41) pour traiter un protocole applicatif, pour la gestion d'équipes d'assistance au sol, d'échange de données entre le centre (3) de gestion des équipes et le réseau de radiotéléphonie (10) auquel sont reliées les équipes.

## Claims

1. Method for managing ground support teams for a transport vehicle in a parking area (19), method wherein a management centre (3) having a set of business servers (2) determines tasks for the respective support teams and provides each team with information specifying its task, the method further comprising the following steps
- the management centre (3) selectively transmits the task information to mobile terminals (15, 16) via a bidirectional network gateway (4), the mobile terminals (15, 16) and the gateway (4) being part of a radio-telephony network (10),
- the teams receive the respective information on the mobile terminals (15, 16) of the network (10) which display this information to them, and after the tasks have been completed
- the teams transmit task completion reports back to the centre (3) from the terminals (15, 16) and through the gateway (14).

2. Method as claimed in Claim 1, wherein the management centre (3) compares the data from an incoming stream identifying parking sites of the transport vehicles, which sites are associated with data regarding respective scheduled movements of transport vehicles, and data identifying one of the sites for, in the event of a match, extracting the data associated with the scheduled movements from the stream and generating corresponding task information.

3. System for transmitting data for implementing the method of Claim 1, comprising:
- a radio-telephony network (10) having mobile terminals (15, 16) and a bidirectional gateway (4) for ground support teams,
- a centre (3) for managing the teams, comprising a set of business servers (2) arranged for determining the tasks for the respective support teams and for selectively transmitting downward information specifying the respective tasks to the terminals (15, 16) via the bidirectional gateway of the network (4), and
- the terminals (15, 16) comprise means (151, 158, 159) for inputting and transmitting to the centre (3) and through the gateway (4) upward information reporting
completion of the tasks of the respective teams.

4. System as claimed in Claim 3, wherein the management centre (3) is connected to the GSM-type network (10) by a WAP gateway (4).

5. System as claimed in any one of Claims 3 and 4, wherein the terminals (15, 16) comprise a screen (159) for displaying the downward information and for composing the upward information messages.

6. System as claimed in any one of Claims 3 to 5, wherein the management centre (3) and the terminals (15, 16) comprise respective management application software (21, 151) for alternatively transmitting a series of blank report template pages to the terminals (15, 16) and for transmitting back the completed page.

7. System as claimed in any one of Claims 3 to 6, wherein the terminals (15, 16) are arranged to co-operate with the stations (11, 12) in order to determine the positions of the terminals (15, 16) and to transmit these positions to the management centre (3).

8. System as claimed in any one of Claims 3 to 7, wherein the report inputting and transmitting means of the terminals (15, 16) comprise business application software (151) for inputting and transmitting reports indicating the completion of a business task.

9. System as claimed in Claim 8, wherein the software (151) is integrated in a SIM card.

10. System as claimed in Claim 8, wherein the software (151) is integrated in a battery pack.

11. System as claimed in any one of Claims 8 to 10, wherein fax software is provided.

12. System as claimed in any one of Claims 3 to 7, wherein the bidirectional gateway (4) comprises software means (41) for processing an application protocol for the management of ground support teams, of the exchange of data between the centre (3) for managing the teams and the radio-telephony network (10) to which the teams are connected.

## Patentansprüche

1. Verfahren zur Verwaltung von Boden-Serviceteams einer Transportmaschine in eine Parkzone (19), wobei bei dem Verfahren ein Verwaltungszentrum (3) mit einer Gruppe von speziellen Servern (2) die Aufgaben für die jeweiligen Serviceteams bestimmt und jedem Serviceteam seine Aufgaben spezifizierende Informationen liefert, wobei das Verfahren außerdem die folgenden Schritte aufweist,
- dass das Verwaltungszentrum (3) die Aufgaben-Informationen selektiv an mobile Endgeräte (15, 16) über eine bidirektionale Netzschnittstelle (4) überträgt, wobei die mobilen Endgeräte (15, 16) und die Schnittstelle (4) Teil eines Funknetzes (10) sind,
- dass die Teams die jeweiligen Informationen auf ihren mobilen Endgeräten (15, 16) vom Netz (10) empfangen, welche ihnen diese präsentieren, und dass nach Ausführung der Aufgaben
- die Teams dem Zentrum (3) mit Hilfe der Endgeräte (15, 16) und über die Schnittstelle (14) Berichte über die Ausführung der Aufgaben zurückübertragen.

2. Verfahren nach Anspruch 1, wobei das Verwaltungszentrum (3) einen Vergleich durchführt zwischen Daten eines eingehenden Flusses, der Standorte von Parkplätzen zum Parken von Transportmaschinen identifiziert, wobei die Standorte zu entsprechende programmierte Bewegungen von Transportmaschinen betreffenden Daten gehören, und einen der Standorte identifizierenden Daten, um im Falle der Übereinstimmung aus dem Fluss die programmierte Bewegungen betreffenden zugehörigen Daten zu entnehmen und die entsprechenden Aufgaben-Informationen zu erzeugen.

3. System zur Datenübertragung zur Durchführung des Verfahrens nach Anspruch 1, mit:
- einem Funknetz (10) mit mobilen Endgeräten (15, 16) und einer bidirektionalen Schnittstelle (4) für Boden-Serviceteams am Boden,
- einem Zentrum (3) zur Verwaltung der Teams, das eine Gruppe von speziellen Servern (2) aufweist, welche eingerichtet sind, um die Aufgaben für die jeweiligen Serviceteams zu bestimmen und um jedem Endgerät (15, 16) über die bidirektionale Netzschnittstelle (4) selektiv Abwärts-Informationen zur Spezifikation der jeweiligen Aufgaben zu übertragen, und
- mit Endgeräten (15, 16), welche Mittel (151, 158, 159) zur Eingabe und zur Übertragung an das Zentrum (3) und über die Schnittstelle (4) von Berichte über die Ausführung der Aufgaben der jeweiligen Teams betreffenden Aufwärts-Informationen aufweisen.

4. System nach Anspruch 3, wobei das Verwaltungszentrum (3) über eine WAP-Schnittstelle (4) mit dem Netz (10) vom GSM-Typ verbunden ist.

5. System nach einem der Ansprüche 3 oder 4, wobei die Endgeräte (15, 16) einen Bildschirm (159) zur Präsentation von Abwärts-Informationen und zum Editieren von Aufwärts-Informationsnachrichten aufweisen.

6. System nach einem der Ansprüche 3 bis 5, wobei das Verwaltungszentrum (3) und die Endgeräte (15, 16) entsprechende Verwaltungs-Anwendungssoftware (21, 151) aufweisen, um abwechselnd an die Endgeräte (15, 16) eine Reihe von leeren Berichtformularen zu übertragen und die ausgefüllte Seite zurückzuübertragen.

7. System nach einem der Ansprüche 3 bis 6, wobei die Endgeräte (15, 16) eingerichtet sind, um mit den Stationen (11, 12) zusammenzuwirken, um die Positionen der Endgeräte (15, 16) zu bestimmen und sie an das Verwaltungszentrum (3) zu übertragen.

8. System nach einem der Ansprüche 3 bis 7, wobei die Mittel zur Eingabe und zur Übertragung von Berichten der Endgeräte (15, 16) eine spezielle Anwendungssoftware (151) aufweisen für die Eingabe und die Übertragung von Berichten über die Ausführung einer speziellen Aufgabe.

9. System nach Anspruch 8, wobei die Software (151) in eine SIM-Karte integriert ist.

10. System nach Anspruch 8, wobei die Software (151) in einen Akkublock integriert ist.

11. System nach einem der Ansprüche 8 bis 10, wobei eine Telefaxsoftware vorgesehen ist.

12. System nach einem der Ansprüche 3 bis 7, wobei die bidrektionale Schnittstelle (4) Softwaremittel (41) aufweist, um für die Verwaltung von Boden-Serviceteams ein Anwendungsprotokoll zum Austausch von Daten zwischen dem Zentrum (3) zur Verwaltung der Teams und dem Funknetz (10), mit welchem die Teams verbunden sind, zu verarbeiten.
